# EUROPEAN PATENT APPLICATION

(11) **EP 3 293 872 A2**
(43) Date of publication of application: **14.03.2018**
(21) Application number: 17190179.6
(22) Date of filing: 08.09.2017
(51) Int. Cl.: H02K 37/14, H02K 1/14, H02K 3/28

(54) **STEPPING MOTOR**

(30) Priority: 08.09.2016 JP 2016175371
(71) Applicant: Mitsumi Electric Co., Ltd., Tama-Shi, Tokyo 206-8567 (JP)
(72) Inventor: MAEDA, Daisuke, Tama-shi, Tokyo (JP); SAKAMOTO, Takanori, Tama-Shi, Tokyo (JP); YAMADA, Kosei, Tama-Shi, Tokyo (JP); EMURA, Keito, Tama-shi, Tokyo (JP)
(74) Representative: Grünecker Patent- und Rechtsanwälte PartG mbB

(57) **Abstract**

A stepping motor includes a rotor magnet magnetized at N-poles and S-poles arranged alternately in a circumferential direction of a rotor and a stator yoke including salient poles disposed with intervals in the circumferential direction. Stator coils are respectively wound around the salient poles. A number of the poles of the rotor is a multiple of 6. A number of the salient poles of the stator yoke is a multiple of 8. The stator coils are composed of first-phase stator coils and second-phase stator coils. The salient poles are divided into a first group and a second group each of which includes half of the salient poles. The salient poles of the respective groups are alternately arranged in the circumferential direction. A winding direction of each of the stator coils is alternately changed for each of the salient poles in the circumferential direction for the respective groups.

## Description

### BACKGROUND

The present invention relates to a stepping motor, and more particularly, to a stepping motor being used as the driving source of a paper feeding mechanism in a laser printer, a copier, etc.

A laser printer, a copier, etc. are each equipped with a paper feeding mechanism to feed sheets of paper one by one at a predetermined speed (pitch). As the driving source of such a paper feeding mechanism, a driving source that uses a stepping motor is known.

Three basic types: a variable reluctance (VR) type, a permanent magnet (PM) type, and a hybrid (HB) type, are known as the types of the stepping motor. The present invention relates to a permanent magnet (PM) type stepping motor.

Furthermore, a claw-pole type two-phase PM stepping motor is known as a PM stepping motor (for example, refer to Patent Document 1). A claw-pole type two-phase PM stepping motor having a step angle of 7.5° (hereafter referred to as "the two-phase PM stepping motor according to the related art") will be described below.

The two-phase PM stepping motor according to the related art is equipped with a rotor and a stator surrounding the circumference of the rotor.

The rotor is magnetized by S-poles and N-poles alternately arranged on a straight line parallel to the rotation shaft thereof. In other words, the rotor is composed of a permanent magnet (rotor magnet) magnetized at 24 poles in the circumferential direction and a rotation shaft installed at the center of this rotor magnet.

On the other hand, the stator is formed of a combination of two sets, each set being composed of a ring-shaped coil and teeth formed by sheet metal processing. The claw-shaped portions of an iron plate are referred to as claw poles or inductors. The claws between which the coil is interposed are combined so as to be engaged with each other in the vertical direction. In other words, each set has a structure in which two yokes (stator yokes), each yoke being provided with the claw poles disposed at every 30°, are combined so that the claw poles are alternately disposed at every 15°, and the ring-shaped coil is disposed around the outer periphery of the claw poles. These two sets are stacked in two stages in the axial direction (the thrust direction) while being displaced 7.5° in the circumferential direction from each other and are used as two phases. These two phases are referred to as an A-phase and a B-phase. Hence, the stator is composed of an A-phase stator and a B-phase stator arranged in the axial direction (the thrust direction).

In the two-phase PM stepping motor according to the related art having the above-mentioned configuration, the magnetic pole of the magnetic field generated at the claw pole is switched by switching the direction of the current to be supplied to the ring-shaped coil of each of the two phases. The magnetic pole of the permanent magnet (the rotor magnet) is attracted depending on the generated magnetic pole, whereby the rotor carries out step rotation (intermittent rotation) at a resolution of 7.5°.

On the other hand, an inner rotor motor is also known as a prior art relating to the present invention, although the motor is not a stepping motor (for example, refer to Patent Document 2). This inner rotor motor is equipped with a rotor and a stator disposed outside this rotor. The rotor is equipped with a sleeve secured to its shaft and a rotor magnet secured to the outer periphery of this sleeve. The rotor magnet is magnetized at four poles so that the polarities of the poles are inverted in a sequence of N, S, N and S in the circumferential direction. The stator is equipped with stator yokes provided with a plurality of salient poles having pole teeth opposed to the rotor and a stator coil wound around the plurality of salient poles. The stator yoke has a structure in which a plurality of punched steel sheets is stacked in the axial direction. The stator yoke is equipped with a back yoke having a nearly annular shape and six salient poles protruding inward from this back yoke, and pole teeth are provided at the tip ends of the respective salient poles. The stator coil is wound around the six salient poles in a sequence of winding directions: clockwise, counterclockwise, and clockwise.
[Patent Document 1] Japanese Patent No. 3289687
[Patent Document 2] Japanese Patent No. 5580159

### SUMMARY

An object of the present invention is to provide a two-phase PM stepping motor exhibiting an excellent noise-reducing effect.

Another object of the present invention is to provide a two-phase PM stepping motor capable of generating large torque.

Another object of the present invention is to provide a two-phase PM stepping motor exhibiting an excellent heat radiating effect.

According to first aspect of the present invention, there is provided a stepping motor which is two-phase PM type, including:
a rotor including a rotor magnet and a rotation shaft installed at a center of the rotor magnet; and
a stator surrounding a circumference of the rotor and including a stator yoke and stator coils, wherein
the rotor magnet is magnetized at N-poles and S-poles being arranged alternately in a circumferential direction of the rotor,
the stator yoke includes salient poles disposed with intervals of an equal angle in the circumferential direction and having pole teeth opposed to the rotor,
the stator coils are respectively wound around the salient poles,
a number of the poles of the rotor is equal to a multiple of 6,
a number of the salient poles of the stator yoke is equal to a multiple of 8,
the stator coils are composed of first-phase stator coils and second-phase stator coils,
the salient poles are divided into a first group and a second group each of which includes half of the salient poles, so that the salient poles of the first group and the salient poles of the second group are alternately arranged in the circumferential direction,
the first-phase stator coils are disposed in a ring shape along an outer periphery of each of the salient poles of the first group so that a winding direction of each of the first-phase stator coils is alternately changed for each of the salient poles in the circumferential direction, and
the second-phase stator coils are disposed in a ring shape along an outer periphery of each of the salient poles of the second group so that a winding direction of each of the second-phase stator coils is alternately changed for each of the salient poles in the circumferential direction.

The stepping motor may be configured such that: a step angle of the two-phase PM stepping motor is 7.5°, the number of the poles of the rotor is equal to 24, and the number of the salient poles of the stator yoke is equal to 16.

The stator yoke may have a structure in which a plurality of metal sheets are stacked in an axial direction of the rotor.

The metal sheets may be punched steel sheets.

The stepping motor may further include a case covering the stator so as to contact with an outer circumferential face of the stator yoke.

The stepping motor may be configured such that: the stator yoke includes a back yoke having an annular shape, the salient poles protrude from the back yoke inward in a radial direction of the rotor, and the pole teeth are provided at tip ends of the respective salient poles.

The case may contact with an outer circumferential face of the back yoke of the stator yoke.

The first-phase stator coils may be electrically conducted to each other, and the second-phase stator coils may be electrically conducted to each other.

According to second aspect of the present invention, there is provided a stepping motor, including:
a rotor including a rotor magnet and a rotation shaft installed at a center of the rotor magnet; and
a stator surrounding a circumference of the rotor and including a stator yoke and stator coils, wherein
the rotor magnet is magnetized at N-poles and S-poles being arranged alternately in a circumferential direction of the rotor,
the stator yoke includes salient poles disposed with intervals of an equal angle in the circumferential direction and having pole teeth opposed to the rotor,
the stator coils are respectively wound around the salient poles,
the stator yoke has a structure in which a plurality of metal sheets are stacked in an axial direction of the rotor.

The metal sheets may be punched steel sheets.

According to third aspect of the present invention, there is provided a stepping motor, including:
a rotor including a rotor magnet and a rotation shaft installed at a center of the rotor magnet;
a stator surrounding a circumference of the rotor and including a stator yoke and stator coils; and
a case covering the stator, wherein
the rotor magnet is magnetized at N-poles and S-poles being arranged alternately in a circumferential direction of the rotor,
the stator yoke includes salient poles disposed with intervals of an equal angle in the circumferential direction and having pole teeth opposed to the rotor,
the stator coils are respectively wound around the salient poles,
the stator yoke includes a back yoke having an annular shape,
the salient poles protrude from the back yoke inward in a radial direction of the rotor,
the pole teeth are provided at tip ends of the respective salient poles, and
the case contacts with an outer circumferential face of the back yoke of the stator yoke.

### BRIEF DESCRIPTION OF DRAWINGS

Fig. 1 is an exploded perspective view showing the two-phase PM stepping motor according to the related art;
Fig. 2 is a vertical sectional view showing the two-phase PM stepping motor shown in Fig. 1;
Fig. 3 is an exploded perspective view showing a two-phase PM stepping motor according to an embodiment of the present invention;
Fig. 4 is a vertical sectional view showing the two-phase PM stepping motor shown in Fig. 3;
Fig. 5 is a cross-sectional view showing the two-phase PM stepping motor shown in Fig. 3, with the stator coil thereof not shown;
Fig. 6A is a schematic cross-sectional view illustrating the operation of the two-phase PM stepping motor shown in Fig. 3, indicating a state in which the rotor thereof is rotated by 7.5° clockwise from the initial state and stopped;
Fig. 6B is a schematic cross-sectional view illustrating the operation of the two-phase PM stepping motor shown in Fig. 3, indicating a state in which the rotor thereof is rotated by 15° clockwise from the initial state and stopped;
Fig. 6C is a schematic cross-sectional view illustrating the operation of the two-phase PM stepping motor shown in Fig. 3, indicating a state in which the rotor thereof is rotated by 22.5° clockwise from the initial state and stopped; and
Fig. 6D is a schematic cross-sectional view illustrating the operation of the two-phase PM stepping motor shown in Fig. 3, indicating a state in which the rotor thereof is rotated by 30° clockwise from the initial state and stopped.

### DETAILED DESCRIPTION OF EXEMPLIFIED EMBODIMENT

The motors disclosed in Patent Documents 1 and 2 described above have the following problems.

As described above, the stepping motor disclosed in Patent Document 1 has the two-phase structure in which the A-phase stator and the B-phase stator are stacked in two stages in the thrust direction. Furthermore, as described above, since the rotor is rotated by the switching of the A-phase and the B-phase, vibration (noise) in the thrust direction occurs due to the difference between the magnetic field strength values of the two phases.

Furthermore, in the two-phase PM stepping motor according to the related art disclosed in Patent Document 1, galvanized steel sheets, silicon steel sheets and stainless steel sheets are frequently used as the magnetic materials for the stator yokes. The magnetic field generated by such a magnetic material depends on the performance of the selected material and the area and thickness of the claw pole. Hence, in the case that the motor is large and current of a certain amount is supplied, magnetic saturation occurs eventually in the stator yokes. As a result, the torque to be generated by the two-phase PM stepping motor according to the related art is restricted and cannot be increased further.

Moreover, the stepping motor disclosed in Patent Document 1 is further equipped with the case for covering the stator. However, since the stator has a structure in which the ring-shaped coils are wound around the stator yokes, the area of the case making direct contact with the stator yokes is small. Hence, the heat generated in the stepping motor cannot be radiated to the outside efficiently.

The inner rotor motor disclosed in Patent Document 2 is not a stepping motor and cannot carry out stepping operation.

Accordingly, an object of the present invention is to provide a two-phase PM stepping motor exhibiting an excellent noise-reducing effect.

Another object of the present invention is to provide a two-phase PM stepping motor capable of generating large torque.

Still another object of the present invention is to provide a two-phase PM stepping motor exhibiting an excellent heat radiating effect.

The other objects of the present invention will become clear as the description proceeds.

The related art of the present invention will first be described referring to the accompanying drawings for easy understanding of the present invention. The related art described below is substantially identical to the stepping motor (the claw-pole type two-phase PM stepping motor) disclosed in Patent Document 1 described above. However, the related art is not completely identical to the stepping motor disclosed in Patent Document 1, but is described in more detail with some minor revisions.

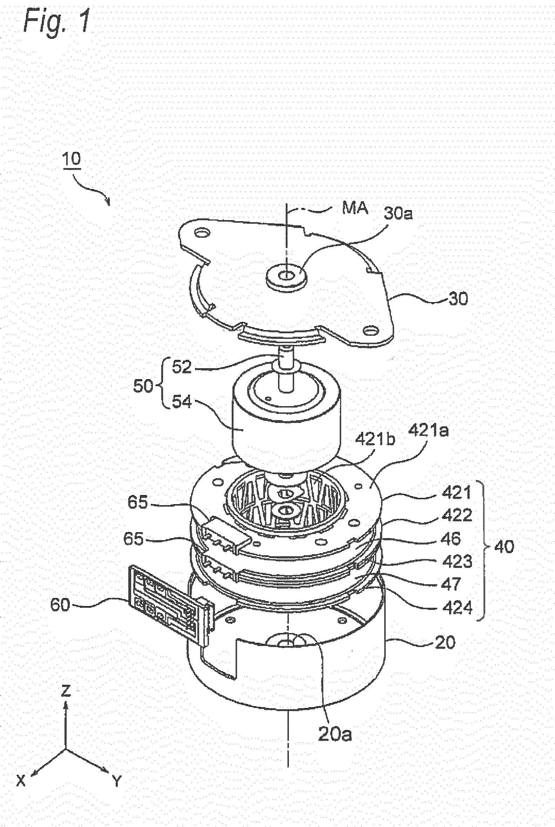

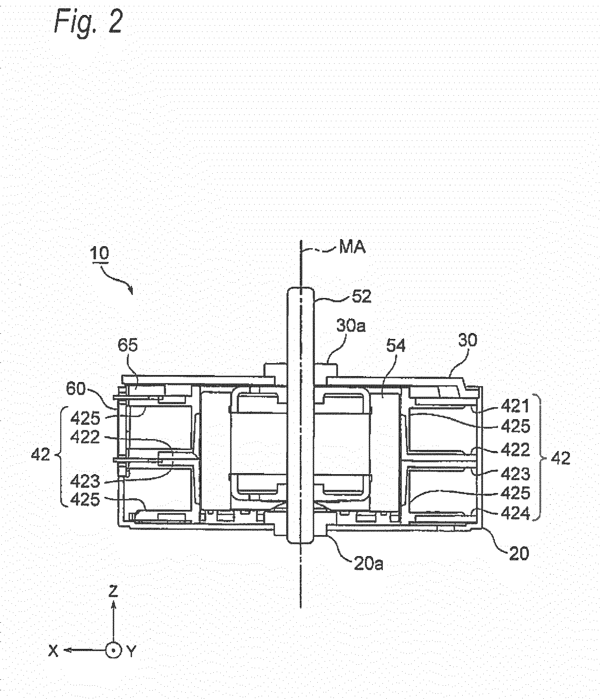

Figs. 1 and 2 are views showing a two-phase PM stepping motor 10 according to the related art. Fig. 1 is an exploded perspective view showing the two-phase PM stepping motor 10, and Fig. 2 is a vertical sectional view showing the two-phase PM stepping motor 10.

Such an orthogonal coordinate system (X, Y, Z) as shown in Figs. 1 and 2 is herein used. In the states shown in Figs. 1 and 2, in the orthogonal coordinate system(X, Y, Z), the Z-direction is the up-down direction (the height direction; the axial direction) in which the rotation axis MA of the motor 10 extends, the X-direction is the front-rear direction (the depth direction) orthogonal to the direction (the Z-direction) of the rotation axis MA of the motor 10, and the Y-direction is the left-right direction (the width direction) orthogonal to both the Z-direction and the X-direction.

The terms "up, down, front, rear, left and right" being used in the Specification to describe directions indicate directions in the drawings for convenience of explanation, and the directions indicated thereby do not necessarily coincide with the up, down, front, rear, left and right directions at the time when the two-phase PM stepping motor 10 according to the related art is actually used.

The two-phase PM stepping motor 10 shown in the figures has a shape being substantially rotationally symmetrical with respect to the rotation axis MA of the motor 10. In this example, the step angle of the two-phase PM stepping motor 10 is 7.5°.

The two-phase PM stepping motor 10 is equipped with a case 20, a bracket 30, a stator 40 and a rotor 50.

The case 20 has a hollow cylindrical shape being open at one end (the upper end). The bracket 30 closes the open end (the upper end) of the case 20. The stator 40 is provided along the inner peripheral face of the case 20. The rotor 50 is rotatably supported by first and second bearing sections 20a and 30a respectively provided on the case 20 and the bracket 30.

The case 20 is made of a metal material and is equipped with the first bearing section 20a near the center of the closed end face (the lower end face) thereof. Similarly, the bracket 30 is made of a metal material and is equipped with the second bearing section 30a near the center thereof.

The stator 40 is composed of a cylindrical yoke unit 42 and first and second stator coils 46 and 47, these being accommodated inside the case 20. The yoke unit 42 is equipped with first to fourth stator yokes 421, 422, 423 and 424 provided with ring-shaped flange sections having an outside diameter nearly equal to the inside diameter of the case 20. The first to fourth stator yokes 421, 422, 423 and 424 of the yoke unit 42 are integrally molded with a bobbin 425 made of resin. The first stator coil 46 is wound around the first winding section demarcated by the first and second stator yokes 421 and 422. The second stator coil 47 is wound around the second winding section demarcated by the third and fourth stator yokes 423 and 424. After the first and second stator coils 46 and 47 are wound, the stator 40 is accommodated inside the case 20 and secured thereto.

The first and second stator coils 46 and 47 are not shown in Fig. 2. Furthermore, the numerals 60 and 65 in Figs. 1 and 2 respectively designate a circuit board and connectors for supplying current to the first and second stator coils 46 and 47.

The combination of the first stator yoke 421, the second stator yoke 422 and the first stator coil 46 is referred to as an A-phase stator (421; 422; 46). Similarly, the combination of the third stator yoke 423, the fourth stator yoke 424 and the second stator coil 47 is referred to as a B-phase stator (423; 424; 47). Hence, the stator 40 is composed of the A-phase stator (421; 422; 46) and the B-phase stator (423; 424; 47) arranged in the axial direction (the thrust direction).

The rotor 50 is composed of a rotation shaft 52 and a rotor magnet 54 having a hollow cylindrical shape. The rotation shaft 52 is rotatably supported by the first and second bearing sections 20a and 30a. The rotor magnet 54 is secured to the rotation shaft 52. The outside diameter of the rotor magnet 54 is formed so as to be slightly smaller than the inside diameter of the center hole of the yoke unit 42. The rotor magnet 54 is magnetized along the circumferential direction thereof. In this example, the rotor magnet 54 is magnetized by S-poles and N-poles alternately arranged on a straight line parallel to the rotation shaft 52, thereby being magnetized at 24 poles in the circumferential direction.

All the first to fourth stator yokes 421 to 424 have the same shape. Hence, only the first stator yoke 421 will be described below. The first stator yoke 421 is made of a magnetic material. The first stator yoke 421 is composed of a ring-shaped flange section 421 a and a plurality of comb-teeth-like salient pole sections 421 b provided so as to rise in the vertical direction from the inner peripheral section of the ring-shaped flange section 421 a. In this example, the first stator yoke 421 has 12 comb-teeth-like salient pole sections 421b disposed at every 30°. Each salient pole section of the comb-teeth-like salient pole sections 421 b is also referred to as a claw pole or an inductor.

In a state in which the first to fourth stator yokes 421 to 424 are mutually combined so that the second stator yoke 422 and the third stator yoke 423 are mutually placed back to back and so that the phase of the comb-teeth-like salient pole sections of one pair of stator yokes (421 and 422) is shifted by a predetermined value with respect to the phase of the comb-teeth-like salient pole sections of the other pair of stator yokes (423 and 424), the first to fourth stator yokes 421 to 424 are accommodated in a metal mold for forming the bobbin 425, and the bobbin 425 made of resin is molded around the first to fourth stator yokes 421 to 424. Consequently, the yoke unit 42 is completed. In this example, the above-mentioned predetermined value is 7.5°.

With the two-phase PM stepping motor 10 configured as described above, the magnetic fields generated in the first and second stator coils 46 and 47 interact with the magnetic field of the rotor magnet 54 via the stator yokes 421, 422, 423 and 424 of the yoke unit 42 by supplying drive current to the first and second stator coils 46 and 47 of the stator 40. At the time, the rotor 50 is intermittently (at a resolution of 7.5° in this example) rotated (rotated in steps) by the action of the comb-teeth-like salient pole sections of the respective stator yokes 421 to 424.

Next, problems in the two-phase PM stepping motor 10 according to the related art configured as described above will be described.

As described above, the two-phase PM stepping motor 10 according to the related art has the two-phase structure in which the A-phase stator (421; 422; 46) and the B-phase stator (423; 424; 47) are stacked in two stages in the thrust direction (the axial direction) Z. Furthermore, since the rotor 50 is rotated by the switching of the A-phase and the B-phase as described above in the two-phase PM stepping motor 10 according to the related art, vibration (noise) in the thrust direction (the axial direction) occurs due to the difference between the magnetic field strength values of the two phases.

Furthermore, metal sheets are frequently used as the magnetic materials for the first to fourth stator yokes 421 to 424. The metal sheets may be specifically galvanized steel sheets, silicon steel sheets and stainless steel sheets. The magnetic field generated by such a magnetic material depends on the performance of the selected material and the area and thickness of the claw pole. Hence, in the case that the motor 10 is large and current of a certain amount is supplied, magnetic saturation occurs eventually in the first to fourth stator yokes 421 to 424. As a result, the torque to be generated by the two-phase PM stepping motor 10 according to the related art is restricted and cannot be increased further.

Moreover, the two-phase PM stepping motor 10 according to the related art is further equipped with the case 20 for covering the stator 40. However, since the stator 40 has a structure in which the ring-shaped first and second stator coils 46 and 47 are wound around the first to fourth stator yokes 421 to 424, the area of the case 20 making direct contact with the first to fourth stator yokes 421 to 424 is small. Hence, the heat generated in the stepping motor 10 cannot be radiated to the outside efficiently.

### [Embodiment]

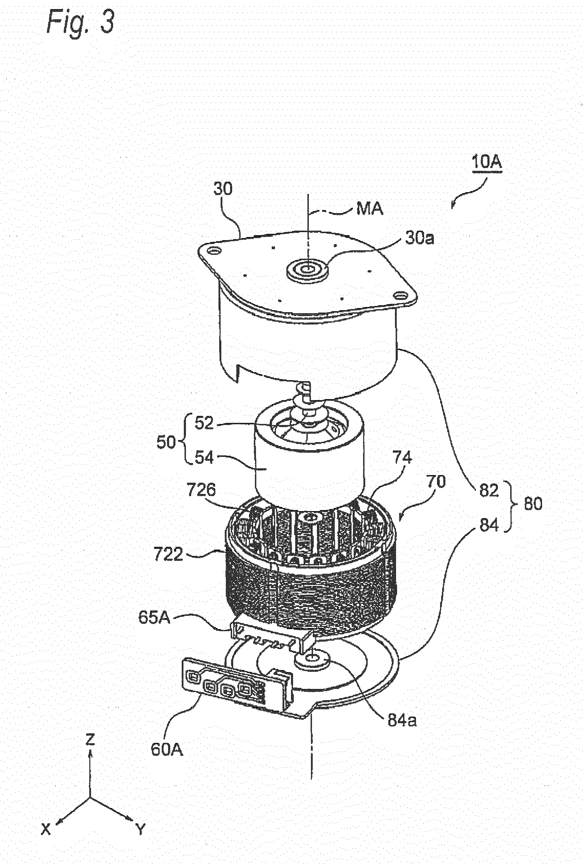

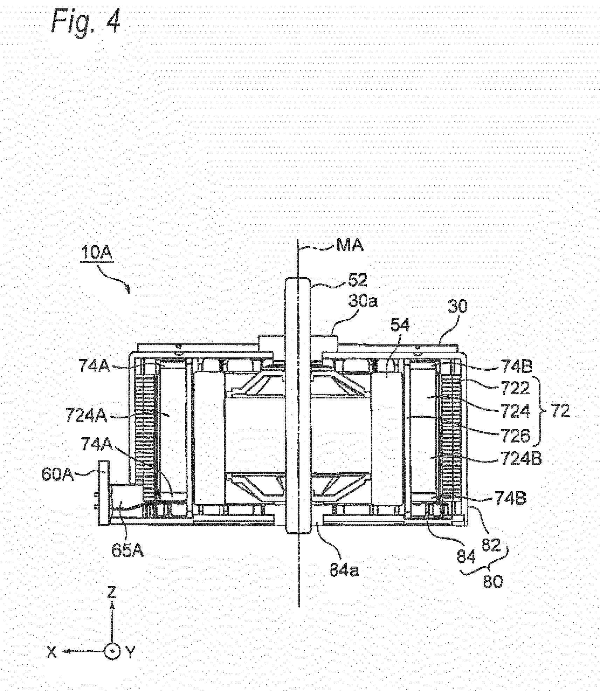

The structure of a two-phase PM stepping motor 10A according to an embodiment of the present invention will be described referring to Figs. 3 and 4.

Fig. 3 is an exploded perspective view showing the two-phase PM stepping motor 10A, and Fig. 4 is a vertical sectional view showing the two-phase PM stepping motor 10A.

Such an orthogonal coordinate system (X, Y, Z) as shown in Figs. 3 and 4 is herein used. In the state shown in Figs. 3 and 4, in the orthogonal coordinate system(X, Y, Z), the Z-direction is the up-down direction (the vertical direction) in which the rotation axis MA of the motor 10A extends, the X-direction is the front-rear direction (the depth direction) orthogonal to the direction (the Z-direction) of the rotation axis MA of the motor 10A, and the Y-direction is the left-right direction (the width direction) orthogonal to both the Z-direction and the X-direction.

The terms "up, down, front, rear, left and right" being used in the Specification to describe directions indicate directions in the drawings for convenience of explanation, and the directions indicated thereby do not necessarily coincide with the up, down, front, rear, left and right directions at the time when the two-phase PM stepping motor 10A according to the related art is actually used.

The two-phase PM stepping motor 10A shown in the figures has a shape being substantially rotationally symmetrical with respect to the rotation axis MA of the motor 10A. In this example, the step angle of the two-phase PM stepping motor 10A is 7.5°.

The two-phase PM stepping motor 10A shown in the figures has a configuration substantially similar to that of the two-phase PM stepping motor 10 according to the related art described above except that the structures (configurations) of the stator and the case are different as described later, thereby operates similarly. Hence, the stator is designated by the reference numeral 70, and the case is designated by the reference numeral 80. The components having the same functions as those of the components of the two-phase PM stepping motor 10 shown in Figs. 1 and 2 are designated by the same reference numerals. In the following description, only the differences from the two-phase PM stepping motor 10 according to the related art will be described in detail to simplify the explanation.

The two-phase PM stepping motor 10A is equipped with a case 80, a bracket 30, a stator 70 and a rotor 50.

The case 80 is composed of an upper case 82 and a lower case 84. The upper case 82 has a hollow cylindrical shape being open at one end (the lower end). The lower case 84 closes the open end (the lower end) of the upper case 82. The bracket 30 is provided at the upper end of the upper case 82. The stator 70 is provided along the inner peripheral face of the upper case 82. The rotor 50 is rotatably supported by first and second bearing sections 84a and 30a respectively provided on the lower case 84 and the bracket 30.

The stator 70 is composed of a stator yoke 72 and a stator coil 74, these being accommodated inside the case 80. The stator yoke 72 is also referred to as a stator core.

The stator yoke 72 is provided with 16 salient poles 724 disposed at intervals of an equal angle (22.5° in the example shown in the figures) in the circumferential direction and having pole teeth 726 opposed to the rotor 50. The stator coil 74 is wound around the 16 salient poles 724 as described later.

More specifically, the stator yoke 72 has a structure in which a plurality of punched steel sheets, such as silicon steel sheets, is stacked in the axial direction Z. In the example shown in the figures, 41 silicon steel sheets, each having a thickness of 0.5 mm, are stacked in the axial direction Z to form the stator yoke 72. The stator yoke 72 is equipped with a back yoke 722 having a nearly annular shape and the 16 salient poles 724 protruding inward from this back yoke 722. Pole teeth 726 are provided at the tip ends of the respective salient poles 724. The pole teeth 726 being open in an umbrella shape are opposed to the rotor magnet 54 with a clearance provided therebetween. The stator coil 74 is wound around the respective salient poles 724.

The numerals 60A and 65A in Figs. 3 and 4 respectively designate a circuit board and a connector for supplying current to the stator coil 74.

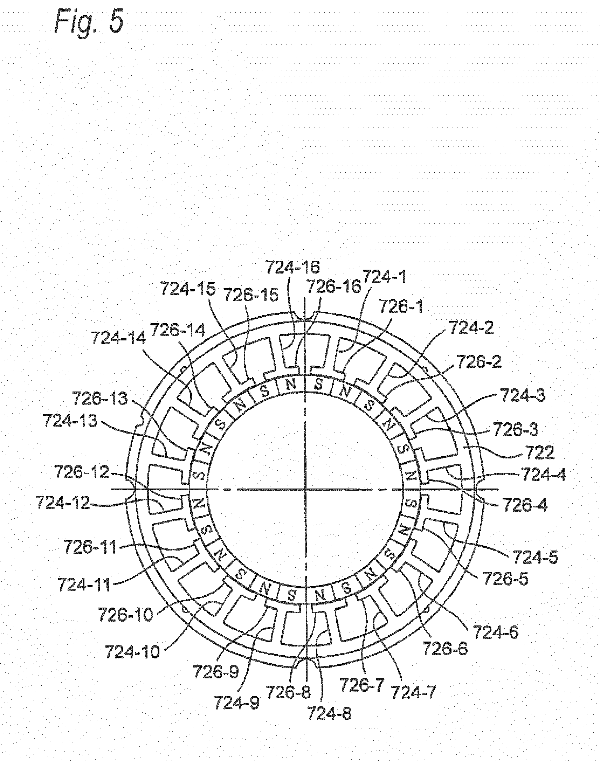

Fig. 5 is a cross-sectional view showing the arrangement relationship between the rotor 50 (the rotor magnet 54) and the stator 70 of the two-phase PM stepping motor 10A, with the stator coil not shown.

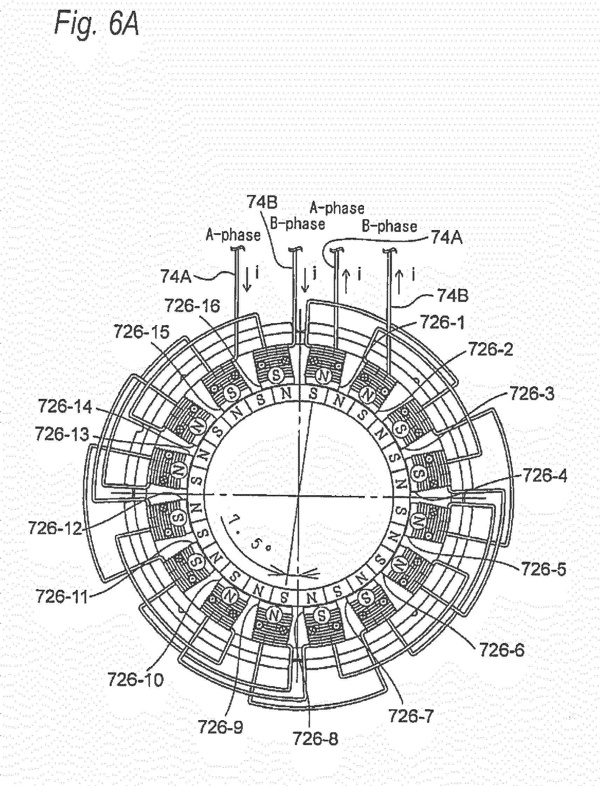

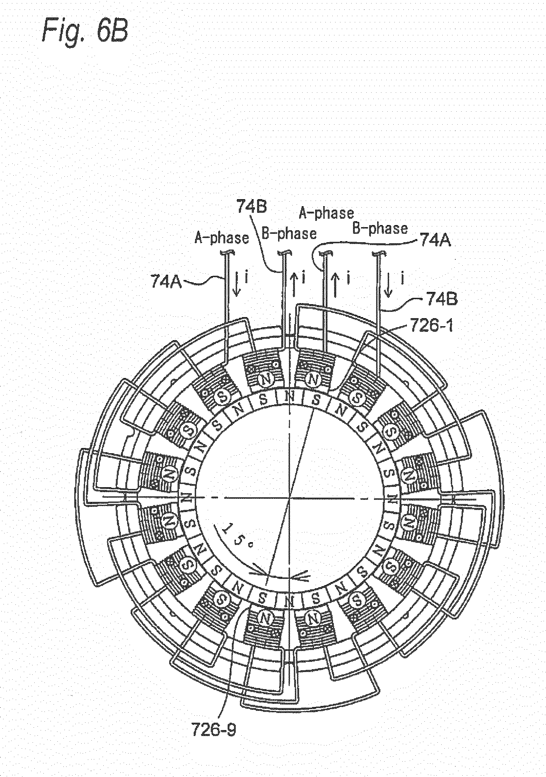

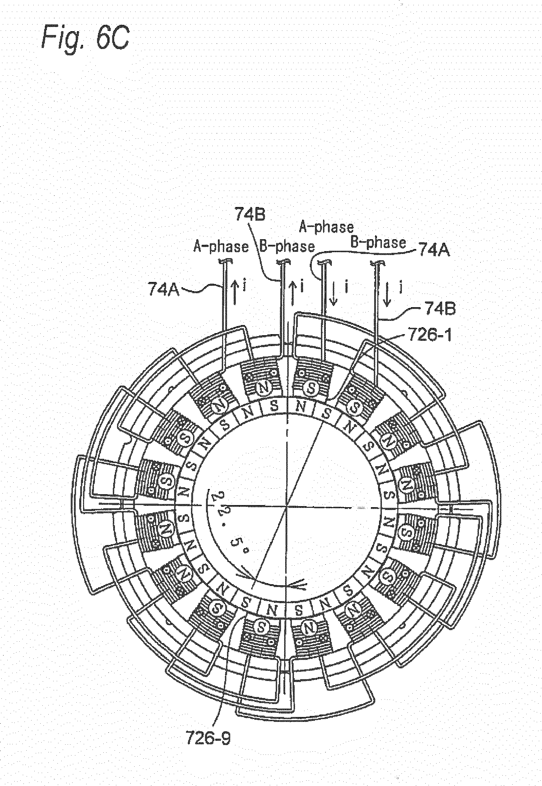

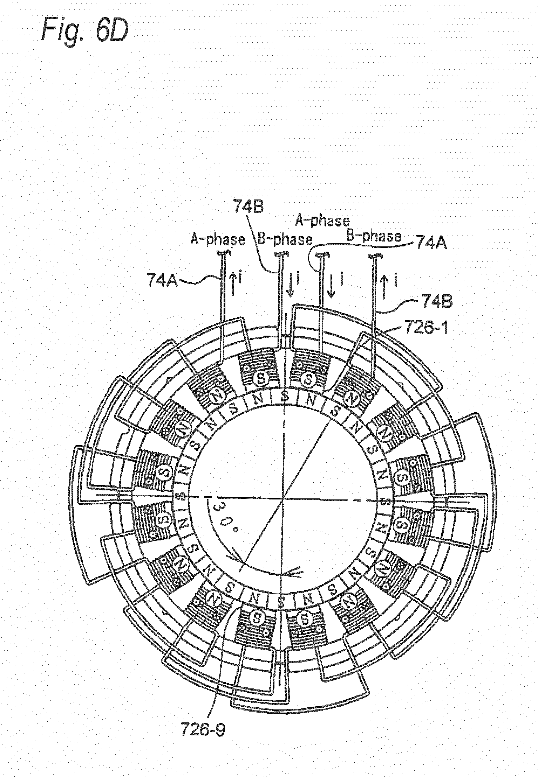

Figs. 6A, 6B, 6C and 6D are views for explaining the operation of the two-phase PM stepping motor 10A. Each of these figures is a schematic cross-sectional view indicating a state in which the rotor 50 is rotated with respect to the stator 70 by a step angle of 7.5°.

First, the configuration of the stator 70 will be described in more detail referring to Figs. 5 and 6A.

The stator coil 74 is composed of a first-phase stator coil 74A and a second-phase stator coil 74B. The first phase is also referred to as an A-phase and the second phase is also referred to as a B-phase. Hence, the first-phase stator coil 74A is also referred to as an A-phase stator coil and the second-phase stator coil 74B is also referred to as a B-phase stator coil.

The 16 salient poles 724 of the stator yoke 72 are alternately selected in the circumferential direction and thereby divided into a first group of eight salient poles 724A and a second group of eight salient poles 724B. Each of the first group of eight salient poles 724A is referred to as an A-phase salient pole and each of the second group of eight salient poles 724B is referred to as a B-phase salient pole.

The first-phase stator coil 74A is disposed in a ring shape along the outer periphery of the first group of eight salient poles (A-phase salient poles) 724A while the winding direction on the salient poles is changed for each pole in the circumferential direction. Similarly, the second-phase stator coil 74B is disposed in a ring shape along the outer periphery of the second group of eight salient poles (B-phase salient poles) 724B while the winding direction on the salient poles is changed for each pole in the circumferential direction.

The method for winding the stator coil 74 around the 16 salient poles 724 of the stator yoke 72 will be described below more specifically.

In Fig. 5, the 16 salient poles 724 are referred to as a first salient pole 724-1, a second salient pole 724-2, ..., and a 16th salient pole 724-16 clockwise with reference to the 12 o'clock direction (the upper direction). Similarly, in Figs. 5 and 6A, the 16 pole teeth 726 are referred to as a first pole tooth 726-1, a second pole tooth 726-2, ..., and a 16th pole tooth 726-16 clockwise with reference to the 12 o'clock direction (the upper direction).

In this case, the first group of eight salient poles (A-phase salient poles) 724A is composed of odd-numbered salient poles, that is, the first salient pole 724-1, the third salient pole 724-3, the fifth salient pole 724-5, the seventh salient pole 724-7, the ninth salient pole 724-9, the 11th salient pole 724-11, the 13th salient pole 724-13, and the 15th salient pole 724-15.

On the other hand, the second group of eight salient poles (B-phase salient poles) 724B is composed of even-numbered salient poles, that is, the second salient pole 724-2, the fourth salient pole 724-4, the sixth salient pole 724-6, the eighth salient pole 724-8, the 10th salient pole 724-10, the 12th salient pole 724-12, the 14th salient pole 724-14, and the 16th salient pole 724-16.

The first-phase stator coil 74A is wound around the first salient pole 724-1 clockwise, wound around the third salient pole 724-3 counterclockwise, wound around the fifth salient pole 724-5 clockwise, wound around the seventh salient pole 724-7 counterclockwise, wound around the ninth salient pole 724-9 clockwise, wound around the 11th salient pole 724-11 counterclockwise, wound around the 13th salient pole 724-13 clockwise, and wound around the 15th salient pole 724-15 counterclockwise.

Similarly, the second-phase stator coil 74B is wound around the second salient pole 724-2 clockwise, wound around the fourth salient pole 724-4 counterclockwise, wound around the sixth salient pole 724-6 clockwise, wound around the eighth salient pole 724-8 counterclockwise, wound around the 10th salient pole 724-10 clockwise, wound around the 12th salient pole 724-12 counterclockwise, wound around the 14th salient pole 724-14 clockwise, and wound around the 16th salient pole 724-16 counterclockwise.

Hence, for example, it is assumed that a forward current is supplied to the first-phase stator coil 74Aand a forward current is also supplied to the second-phase stator coil 74B as shown in Fig. 6A. In this case, as shown in Fig. 6A, the first pole tooth 726-1 becomes an N-pole, the second pole tooth 726-2 becomes an N-pole, the third pole tooth 726-3 becomes an S-pole, the fourth pole tooth 726-4 becomes an S-pole, the fifth pole tooth 726-5 becomes an N-pole, the sixth pole tooth 726-6 becomes an N-pole, the seventh pole tooth 726-7 becomes an S-pole, the eighth pole tooth 726-8 becomes an S-pole, the ninth pole tooth 726-9 becomes an N-pole, the 10th pole tooth 726-10 becomes an N-pole, the 11th pole tooth 726-11 becomes an S-pole, the 12th pole tooth 726-12 becomes an S-pole, the 13th pole tooth 726-13 becomes an N-pole, the 14th pole tooth 726-14 becomes an N-pole, the 15th pole tooth 726-15 becomes an S-pole, and the 16th pole tooth 726-16 becomes an S-pole.

Next, the operation of the two-phase PM stepping motor 10A will be described below referring to Figs. 6A to 6D. In the initial state thereof, it is assumed that the rotor magnet 54 of the rotor 50 is magnetized at 24 poles in the circumferential direction as shown in Fig. 6D so as to be magnetized alternately to an S-pole, an N-pole, an S-pole, an N-pole, ... clockwise with reference to the 12 o'clock direction (the upper direction). In other words, the rotor magnet 54 is magnetized to an S-pole in the 12 o'clock direction (the upper direction), the 3 o'clock direction (the right direction), the 6 o'clock direction (the lower direction), and the 9 o'clock direction (the left direction).

In this state, first, a forward current is supplied to the first-phase stator coil 74A and a forward current is also supplied to the second-phase stator coil 74B as shown in Fig. 6A. Hence, as described above, the first pole tooth 726-1 becomes an N-pole, the second pole tooth 726-2 becomes an N-pole, the third pole tooth 726-3 becomes an S-pole, the fourth pole tooth 726-4 becomes an S-pole, the fifth pole tooth 726-5 becomes an N-pole, the sixth pole tooth 726-6 becomes an N-pole, the seventh pole tooth 726-7 becomes an S-pole, the eighth pole tooth 726-8 becomes an S-pole, the ninth pole tooth 726-9 becomes an N-pole, the 10th pole tooth 726-10 becomes an N-pole, the 11th pole tooth 726-11 becomes an S-pole, the 12th pole tooth 726-12 becomes an S-pole, the 13th pole tooth 726-13 becomes an N-pole, the 14th pole tooth 726-14 becomes an N-pole, the 15th pole tooth 726-15 becomes an S-pole, and the 16th pole tooth 726-16 becomes an S-pole. As is well known, same poles repel each other and opposite poles attract each other. As a result, as shown in Fig. 6A, the rotor 50 is rotated by 7.5° clockwise around the rotation axis MA from the initial state and stopped.

Furthermore, a forward current is supplied to the first-phase stator coil 74A and a backward current is supplied to the second-phase stator coil 74B as shown in Fig. 6B. In this state, as shown in Fig. 6B, the first pole tooth 726-1 becomes an N-pole, the second pole tooth 726-2 becomes an S-pole, the third pole tooth 726-3 becomes an S-pole, the fourth pole tooth 726-4 becomes an N-pole, the fifth pole tooth 726-5 becomes an N-pole, the sixth pole tooth 726-6 becomes an S-pole, the seventh pole tooth 726-7 becomes an S-pole, the eighth pole tooth 726-8 becomes an N-pole, the ninth pole tooth 726-9 becomes an N-pole, the 10th pole tooth 726-10 becomes an S-pole, the 11 th pole tooth 726-11 becomes an S-pole, the 12th pole tooth 726-12 becomes an N-pole, the 13th pole tooth 726-13 becomes an N-pole, the 14th pole tooth 726-14 becomes an S-pole, the 15th pole tooth 726-15 becomes an S-pole, and the 16th pole tooth 726-16 becomes an N-pole. As a result, as shown in Fig. 6B, the rotor 50 is rotated by 7.5° clockwise around the rotation axis MA and stopped. Hence, the rotor 50 is rotated by 15° clockwise around the rotation axis MA from the initial state.

Moreover, a backward current is supplied to the first-phase stator coil 74A and a backward current is supplied to the second-phase stator coil 74B as shown in Fig. 6C. In this state, as shown in Fig. 6C, the first pole tooth 726-1 becomes an S-pole, the second pole tooth 726-2 becomes an S-pole, the third pole tooth 726-3 becomes an N-pole, the fourth pole tooth 726-4 becomes an N-pole, the fifth pole tooth 726-5 becomes an S-pole, the sixth pole tooth 726-6 becomes an S-pole, the seventh pole tooth 726-7 becomes an N-pole, the eighth pole tooth 726-8 becomes an N-pole, the ninth pole tooth 726-9 becomes an S-pole, the 10th pole tooth 726-10 becomes an S-pole, the 11th pole tooth 726-11 becomes an N-pole, the 12th pole tooth 726-12 becomes an N-pole, the 13th pole tooth 726-13 becomes an S-pole, the 14th pole tooth 726-14 becomes an S-pole, the 15th pole tooth 726-15 becomes an N-pole, and the 16th pole tooth 726-16 becomes an N-pole. As a result, as shown in Fig. 6C, the rotor 50 is rotated by 7.5° clockwise around the rotation axis MA and stopped. Hence, the rotor 50 is rotated by 22.5° clockwise around the rotation axis MA from the initial state.

Still further, a backward current is supplied to the first-phase stator coil 74A and a forward current is supplied to the second-phase stator coil 74B as shown in Fig. 6D. In this state, as shown in Fig. 6D, the first pole tooth 726-1 becomes an S-pole, the second pole tooth 726-2 becomes an N-pole, the third pole tooth 726-3 becomes an N-pole, the fourth pole tooth 726-4 becomes an S-pole, the fifth pole tooth 726-5 becomes an S-pole, the sixth pole tooth 726-6 becomes an N-pole, the seventh pole tooth 726-7 becomes an N-pole, the eighth pole tooth 726-8 becomes an S-pole, the ninth pole tooth 726-9 becomes an S-pole, the 10th pole tooth 726-10 becomes an N-pole, the 11th pole tooth 726-11 becomes an N-pole, the 12th pole tooth 726-12 becomes an S-pole, the 13th pole tooth 726-13 becomes an S-pole, the 14th pole tooth 726-14 becomes an N-pole, the 15th pole tooth 726-15 becomes an N-pole, and the 16th pole tooth 726-16 becomes an S-pole. As a result, as shown in Fig. 6D, the rotor 50 is rotated by 7.5° clockwise around the rotation axis MA and stopped. Hence, the rotor 50 is rotated by 30° clockwise around the rotation axis MA from the initial state. The state of the rotor 50 at this time is the same as the above-mentioned initial state.

The states shown in Figs. 6A, 6B, 6C and 6D are then repeated similarly, whereby the rotor 50 is intermittently rotated clockwise around the rotation axis MA at a step angle of 7.5°.

Next, the advantages of this embodiment will be described below.

In the two-phase PM stepping motor 10A according to this embodiment, the stator yoke (stator core) 72 of the stator 70 has the 16 salient poles 724 in the circumferential direction thereof, whereby magnetic pole switching is not carried out in the thrust direction. Consequently, a noise-reducing effect can be expected.

Furthermore, in the two-phase PM stepping motor 10A according to this embodiment, the stator yoke (stator core) 72 of the stator 70 has a structure in which a plurality of steel sheets is stacked. Hence, the total magnetic flux can be increased, and the limit of magnetic saturation can be raised. As a result, the torque generated by the two-phase PM stepping motor 10A can be made larger than that of the two-phase PM stepping motor 10 according to the related art, whereby the motor efficiency of the motor 10A can be improved.

Moreover, in the two-phase PM stepping motor 10A according to this embodiment, the upper case 82 of the case 80 makes direct contact with the back yoke 722 of the stator yoke (stator core) 72 of the stator 70, whereby the area of the contact can be increased. As a result, the motor 10A has a high heat radiating effect, and heat generation of the motor 10Acan be suppressed.

In the above-mentioned embodiment, the motor having a configuration in which the step angle is 7.5°, the rotor magnet 54 of the rotor 50 is magnetized at 24 poles, and the stator yoke 72 of the stator 70 has the 16 salient poles 724 is taken as an example and described. However, the present invention is not limited to the motor configured as described above as a matter of course. In other words, the step angle is not limited to 7.5°, but may be changed to other angles, such as 15° and 3.25°. The number of the poles of the rotor magnet and the number of the salient poles of the stator yoke can be changed depending on the change in the step angle. Generally speaking, the present invention can be applied to a two-phase PM stepping motor in which the rotor magnet is magnetized at P pieces of poles, P being equal to a multiple of 6, and the stator yoke has M pieces of salient poles, M being equal to a multiple of 8.

Although the present invention has been described above referring to the embodiment thereof, the present invention is not limited to the above-mentioned embodiment. The configuration and the details of the present invention can be subjected to various modifications that can be understood by those skilled in the art within the scope of the present invention.

For example, although the stator yoke (stator core) formed by stacking 41 silicon steel sheets, each having a thickness of 0.5 mm, is used in the above-mentioned embodiment, the number of steel sheets to be stacked and the thickness of the steel sheet may be changed depending on the specifications of a motor. For example, in the case that a motor is desired to be low in profile, the number of steel sheets to be stacked may merely be reduced without changing the thickness. In the case that the torque of a motor is desired to be improved, the number of steel sheets to be stacked may merely be increased without changing the thickness. The thickness of the steel sheet is not limited to 0.5 mm, but steel sheets having various thickness values, such as 0.65 mm, may be used as a matter of course. What's more, although the case in which the step angle is 7.5° is taken as an example and described in the above-mentioned embodiment, the step angle can be changed to other step angles by increasing or decreasing the number of the salient poles of the stator yoke using a multiple of 8 as described above.

The stepping motor according to the present invention is not used only as the drive source of a paper feeding mechanism, but can be used generally for apparatuses that are required to be rotated intermittently at a predetermined pitch.

The present invention can provide a two-phase PM stepping motor exhibiting an excellent noise-reducing effect.

## Claims

1. A stepping motor which is two-phase PM type, comprising:
a rotor including a rotor magnet and a rotation shaft installed at a center of the rotor magnet; and
a stator surrounding a circumference of the rotor and including a stator yoke and stator coils, wherein
the rotor magnet is magnetized at N-poles and S-poles being arranged alternately in a circumferential direction of the rotor,
the stator yoke includes salient poles disposed with intervals of an equal angle in the circumferential direction and having pole teeth opposed to the rotor,
the stator coils are respectively wound around the salient poles,
a number of the poles of the rotor is equal to a multiple of 6,
a number of the salient poles of the stator yoke is equal to a multiple of 8,
the stator coils are composed of first-phase stator coils and second-phase stator coils,
the salient poles are divided into a first group and a second group each of which includes half of the salient poles, so that the salient poles of the first group and the salient poles of the second group are alternately arranged in the circumferential direction,
the first-phase stator coils are disposed in a ring shape along an outer periphery of each of the salient poles of the first group so that a winding direction of each of the first-phase stator coils is alternately changed for each of the salient poles in the circumferential direction, and
the second-phase stator coils are disposed in a ring shape along an outer periphery of each of the salient poles of the second group so that a winding direction of each of the second-phase stator coils is alternately changed for each of the salient poles in the circumferential direction.

2. The stepping motor according to claim 1, wherein
a step angle of the two-phase PM stepping motor is 7.5°,
the number of the poles of the rotor is equal to 24, and
the number of the salient poles of the stator yoke is equal to 16.

3. The stepping motor according to claim 1 or 2, wherein
the stator yoke has a structure in which a plurality of metal sheets are stacked in an axial direction of the rotor.

4. The stepping motor according to claim 3, wherein
the metal sheets are punched steel sheets.

5. The stepping motor according to any one of claims 1 to 4, further comprising:
a case covering the stator so as to contact with an outer circumferential face of the stator yoke.

6. The stepping motor according to any one of claims 1 to 4, wherein
the stator yoke includes a back yoke having an annular shape,
the salient poles protrude from the back yoke inward in a radial direction of the rotor, and
the pole teeth are provided at tip ends of the respective salient poles.

7. The stepping motor according to claim 6, further comprising:
a case covering the stator so as to contact with an outer circumferential face of the back yoke of the stator yoke.

8. The stepping motor according to any one of claims 1 to 7, wherein
the first-phase stator coils are electrically conducted to each other, and
the second-phase stator coils are electrically conducted to each other.

9. A stepping motor, comprising:
a rotor including a rotor magnet and a rotation shaft installed at a center of the rotor magnet; and
a stator surrounding a circumference of the rotor and including a stator yoke and stator coils, wherein
the rotor magnet is magnetized at N-poles and S-poles being arranged alternately in a circumferential direction of the rotor,
the stator yoke includes salient poles disposed with intervals of an equal angle in the circumferential direction and having pole teeth opposed to the rotor,
the stator coils are respectively wound around the salient poles,
the stator yoke has a structure in which a plurality of metal sheets are stacked in an axial direction of the rotor.

10. The stepping motor according to claim 9, wherein
the metal sheets are punched steel sheets.

11. A stepping motor, comprising:
a rotor including a rotor magnet and a rotation shaft installed at a center of the rotor magnet;
a stator surrounding a circumference of the rotor and including a stator yoke and stator coils; and
a case covering the stator, wherein
the rotor magnet is magnetized at N-poles and S-poles being arranged alternately in a circumferential direction of the rotor,
the stator yoke includes salient poles disposed with intervals of an equal angle in the circumferential direction and having pole teeth opposed to the rotor,
the stator coils are respectively wound around the salient poles,
the stator yoke includes a back yoke having an annular shape,
the salient poles protrude from the back yoke inward in a radial direction of the rotor,
the pole teeth are provided at tip ends of the respective salient poles, and
the case contacts with an outer circumferential face of the back yoke of the stator yoke.
